Europäisches Patentamt

European Patent Office

Office européen des brevets

(19)

(11) Numéro de publication: **0 245 331**
**B1**

(12) FASCICULE DE BREVET EUROPEEN

(45) Date de publication du fascicule du brevet: **31.10.90**

(51) Int. Cl.⁵: **F 02 D 13/02,** F 02 B 29/08

(21) Numéro de dépôt: **86906355.2**

(22) Date de dépôt: **05.11.86**

(86) Numéro de dépót international:
**PCT/FR86/00375**

(87) Numéro de publication internationale:
**WO 87/03043 21.05.87 Gazette 87/11**

(60) **Demande divisionnaire 90106127.5 déposée le 05/11/86.**

(54) MOTEUR A COMBUSTION INTERNE A DEUX TEMPS.

(30) Priorité: **06.11.85 FR 8516430**

(43) Date de publication de la demande:
**19.11.87 Bulletin 87/47**

(45) Mention de la délivrance du brevet:
**31.10.90 Bulletin 90/44**

(84) Etats contractants désignés:
**AT BE CH DE FR GB IT LI NL SE**

(56) Documents cités:
DE-A-3 143 402
DE-B-1 121 406
GB-A-2 082 676
US-A-2 097 883
US-A-2 222 134

(73) Titulaire: **Melchior, Jean Frédéric**
**126 Boulevard Montparnasse**
**F-75014 Paris (FR)**

(72) Inventeur: **Melchior, Jean Frédéric**
**126 Boulevard Montparnasse**
**F-75014 Paris (FR)**

(74) Mandataire: **Lemoine, Michel Cabinet Lemoine et Bernasconi et al**
**13 Boulevard des Batignolles**
**F-75008 Paris (FR)**

Courier Press, Leamington Spa, England.

**Description**

La présente invention a trait aux moteurs à combustion interne qui comprennent au moins une chambre de travail de volume variable limitée par un piston et munie d'au moins une entrée d'air et d'au moins une sortie de gaz et qui fonctionne selon le cycle à deux temps.

Les moteurs concernés par l'invention sont de préférence, mais non exclusivement, suralimentés par un groupe turbo-compresseur constitué d'une turbine actionnée par les gaz d'échappement du moteur et reliée mécaniquement à un compresseur de suralimentation dont la sortie communique avec la ou les entrées d'air de la ou de chaque chambre de travail.

On sait que le fonctionnement d'un moteur à combustion interne qui comprend au moins une chambre de travail de volume variable, c'est-à-dire une chambre délimitée par un moyen mobile (tel qu'un piston) coopérant avec un ensemble fixe (tel qu'un cylindre), comporte toujours deux phases distinctes, à savoir:

—une phase dite fermée, pendant laquelle la chambre de travail est isolée des systèmes d'admission d'air et d'échappement de gaz, par l'état de fermeture simultanée d'organes distributeurs d'admission et d'échappement, et au cours de laquelle s'effectuent la compression, la combustion et la détente fournissant l'essentiel du travail positif reçu par l'arbre du moteur, et

—une phase ouverte d'échanges de gaz pendant laquelle la chambre de travail communique avec les systèmes d'admission et/ou d'échappement.

Dans tous les cas de moteurs de ce type, cette phase ouverte comporte une période de décharge de la pression régnant dans la ou chaque chambre de travail, cette période de décharge étant provoquée par la mise en communicaton de la chambre de travail, à la fin de la course de détente de la phase fermée, avec le seul système d'échappement par ouverture de l'organe distributeur d'échappement. Cette période de décharge est souvent appelée "bouffée d'échappement" ou "pulse" en langue anglaise. Pendant cette période, du fait que la pression régnant dans la chambre de travail, qui est augmentée par l'échauffement des gaz entraîné par la combustion, est très supérieure à la pression régnant dans le système d'échappement (dans un rapport généralement de l'ordre de 2 à 3), il se produit une détente d'abord sonique puis subsonique au cours de laquelle une parte importante (plus de la moitié) de la masse de gaz contenue dans la chambre de travail est transférée au système d'échappement.

Dans un moteur à quatre temps, après la période de décharge, une partie au moins du reste des gaz est refoulée vers l'échappement par le piston, l'air frais étant ensuite aspiré par celui-ci pendant la période de volume croissant de la chambre de travail. Au contraire, dans un moteur à deux temps, l'évacuation des gaz restant dans la chambre de travail après la période de décharge et leur remplacement par de l'air frais sont réalisés de façon aérodynamique par l'état d'ouverture simultanée des organes distributeurs d'admission et d'échappement, pendant une période dite de balayage. L'efficacité de ce balayage est déterminante pour le rendement et les performances d'un moteur à deux temps. Différents systèmes de balayage ont déjà été proposés à ce sujet, en particulier l'utilisation, dans un moteur à deux temps, de soupapes pour réaliser les organes d'admission et les organes d'échappement.

Cependant, pour que ce balayage puisse effectivement être réalisé, il faut que la pression régnant directement en amont de la ou des chambres de travail, c'est-à-dire dans le système d'admission, soit en moyenne supérieure à celle régnant directement en aval dans le système d'échappement pendant le balayage, et ceci à tous les régimes de fonctionnement du moteur. Les moteurs à deux temps nécessitaient donc jusqu'ici des moyens générateurs de pression pour maintenir, pendant ladite période de balayage, cette différence de pression à une valeur en moyenne positive (voir US—A—2 222 134).

Ces moyens générateurs de pression peuvent être constitués soit par le piston mobile lui-même utilisé à double effet et coopérant, par exemple, avec une chambre aménagée sous sa face inférieure (par exemple sur les pistons à crosse), ou avec le carter fixe de l'arbre principal (comme dans le GB—A—2082676) et associé à des organes distributeurs adéquats pour assurer la compression préalable de l'air avant son introduction dans la chambre de travail, soit par un organe surpresseur auxiliaire relié mécaniquement à l'arbre principal (voir DE—A—3 143 402), tel que compresseur volumétrique à palettes ou du type ROOTS, ou bien entraîné indépendamment de la rotation de l'arbre principal, par exemple électriquement.

Du point de vue économique, ces différents moyens générateurs de pression influent défavorablement, tant sur le dimensionnement du moteur avec ses auxiliaires que sur la consommation d'énergie, lors de la mise en oeuvre de ces moyens.

Dans le cas des moteurs à deux temps suralimentés par turbo-compresseur, la différence de pression positive entre l'amont et l'aval de la chambre de travail, nécessaire au balayage de cette chambre pendant la période de balayage, est assurée naturellement par le turbo-compresseur de suralimentation lors fu fonctionnement du moteur à puissance élevée. En effet, lorsque le compresseur fonctionne avec un rapport de pression suffisant, le rapport de détente de la turbine, nécessaire pour l'entraînement stable du turbocompresseur, sera d'autant plus faible que le rendement global de celui-ci et la température des gaz disponible à la sortie des chambres de travail seront plus élevés. Ainsi, un turbo-compresseur moderne ayant, par exemple, un rendement global de 60% et dont la turbine est alimentée par des gaz sous 4 bars à 600°C délivrera de l'air sous 5 bars à partir de l'atmosphère à 20°C, la chambre de travail étant ainsi naturellement soumise à une différence de pression positive de 1 bar.

En revanche, lors du fonctionnement à basse puissance de ces moteurs à deux temps suralimentés, l'enthalpie disponible à l'échappement des chambres de travail est insuffisante pour que la turbine de suralimentation puisse entraîner le compresseur à une vitesse telle que la susdite différence de pression reste positive. En conséquence, sans moyens annexes, le moteur s'arrêterait du fait de cette inversion de la différence des pressions qui empêcherait la réintroduction d'air frais dans la chambre de travail. A fortiori, le démarrage du moteur serait impossible.

Ces moyens annexes peuvent être du type des moyens générateurs de pression décrits ci-dessus. Ils peuvent également être du type permettant de faire fonctionner le turbo-compresseur indépendamment du moteur, à une vitesse empêchant l'inversion de la différence des pressions en amont et en aval de la chambre de travail. Ainsi, par exemple, on peut mettre en place un conduit de dérivation reliant la sortie du compresseur à l'entrée de la turbine et associé à une chambre de combustion auxiliaire et prévoir des moyens de régulation pour empêcher la vitesse du turbo-compresseur de tomber au-dessous d'un seuil donné à l'avance. En variante, on peut adjoindre au turbo-compresseur une roue de turbine supplémentaire que l'on alimente par un fluide sous pression, telle que, par exemple, une turbine hydraulique Pelton.

Ces moyens annexes connus sont cependant complexes et coûteux et entraînent une augmentation de la consommation de combustible lors de leur mise en oeuvre.

L'invention a donc pour objectif de réaliser des moteurs à deux temps sans dispositif de balayage externe autre que le turbo-compresseur de suralimentation, lorsqu'il existe, pour assurer le démarrage et le fonctionnement à faible puissance.

L'invention a également pour objectif d'assurer l'introduction d'air frais de façon naturelle dans la ou chaque chambre de travail des moteurs à deux temps, notamment mais non exclusivement des moteurs suralimentés, lors de leur fonctionnement à faible puissance et à l'occasion de leur démarrage, et ceci sans adjonction des moyens annexes précités.

Un autre objectif de l'invention est d'utiliser, au moins partiellement, l'énergie présente en aval de la ou de chaque chambre de travail pour faciliter ladite introduction d'air frais.

Un autre objective de l'invention est de faciliter l'accélération du rotor d'un turbo-compresseur de suralimentation, lorsqu'il est prévu, en accroissant l'énergie disponible en aval de la ou de chaque chambre de travail, dès l'ouverture de l'organe distributeur d'échappement.

Un autre objectif de l'invention est d'améliorer la courbe de couple du moteur.

Un autre objectif encore est de faciliter le démarrage du moteur, notamment à froid.

L'invention a pour objet un moteur à combustion interne à au moins une chambre de travail de volume variable limitée par un piston dans un cylindre et fonctionnant selon le cycle à deux temps, moteur dans lequel l'entrée d'air et la sortie de gaz de la chambre de travail sont munies de soupapes d'admission et d'échappement synchronisées avec la rotation de l'arbre du moteur, les soupapes d'admission et d'échappement étant actionnées par des moyens de commande agencés pour pouvoir faire varier en fonctionnement la position angulaire, vue sur l'arbre du moteur, de leur ouverture et éventuellement de leur fermeture en fonction d'au moins un paramètre, auquel sont sensibles lesdits moyens de commande, caractérisé en ce que

(a) le cylindre est dépourvu de lumières latérales;

(b) le moteur est dépourvu d'un dispositif de balayage externe autre qu'un turbo-compresseur de suralimentation, lequel est lui-même facultatif, pour assurer le démarrage et le fonctionnement à faible puissance;

(c) le susdit paramètre est un paramètre de fonctionnement du moteur lié à la puissance de celui-ci;

(d) les moyens de commande sont agencés pour avancer le début d'ouverture de la soupape d'admission, mais en le maintenant postérieur au début de l'ouverture de la soupape d'échappement, au démarrage et en fonctionnement à faible puissance, par rapport aux conditions de marche normale, afin d'obtenir à tout régime l'introduction d'une quantité suffisante d'air frais dans la ou chaque chambre de travail.

Conformément à l'invention, les moyens de commande des soupapes d'admission et d'échappement permettent de modifier leurs positions angulaires de début d'ouverture et de fermeture sur une plage angulaire importante.

Le domaine de l'invention exclut donc les organes distributeurs de type inactif recontrés dans la quasi-totalité des moteurs à deux temps connus et constitués par des lumières aménagées dans la paroi fixe des cylindres et découvertes cycliquement par le piston, au cours de son déplacement. Dans ce cas, en effet, les positions angulaires d'ouverture et/ou de fermeture sont nécessairement déterminées une fois pour toutes, par rapport à la position du piston mobile, et symétriques par rapport à la position du piston correspondant au volume maximal de la chambre de travail, dite point mort bas (PMB), lesdites lumières assurant la communication entre la chambre de travail et l'extérieur.

De façon particulièrement avantageuse, les soupapes peuvent être agencées comme décrit dans le brevet français no. 2.338.385 déposé le 15 janvier 1976.

Par paramètre de fonctionnement du moteur, on èntend, dans le sens de l'invention, un paramètre détectable lié au fonctionnement du moteur et susceptible de prendre au moins deux valeurs, l'une correspondant à un fonctionnement du moteur pendant lequel la valeur de la différence de pression entre l'amont, ou admission, de la chambre, et l'aval, ou échappement, reste positive et suffisante pour assurer le bon fonctionnement du moteur de sorte que celui-ci peut tourner à la façon habituelle d'un moteur à deux temps classique en régime de fonctionnement normal, alors que l'autre correspond à un fonctionnement du moteur pendant lequel on peut craindre que ladite différence de pression ne soit pas suffisamment importante, ou devienne négative, ou bien pendant lequel ladite différence de pression n'existe simplement pas, comme dans le cas d'un moteur arrêté.

Ce paramètre peut être, par exemple:

—la valeur de la pression de suralimentation, dans le cas d'un moteur à deux temps suralimenté,

—la quantité de carburant introduite par cycle dans la ou les chambres de travail,

—la vitesse de rotation d l'arbre principal du moteur,

—la température régnant dans le collecteur d'échappement,

la valeur effective de la différence entre les pressions d'admission et d'échappement et, de préférence, entre les pressions régnant directement en amont et directement en aval de la chambre de travail.

Les moyens de commande, rendus sensibles, par exemple par un capteur, audit paramètre et commandent le fonctionnement des soupapes d'admission et d'échappement, peuvent être d'un type quelconque. Il peuvent, par exemple, être de type mécanique et entraînés directement par l'arbre principal du moteur par l'intermédiaire d'une chaîne cinématique, par example dans le cas d'arbres à cames. Dans ce cas, des moyens de réglage mécaniques ou autres sont prévus pour modifier les positions angulaires d'ouverture et de fermeture des soupapes d'admission et d'échappement.

Les susdits moyens de commande peuvent également être de type électrique, hydraulique ou pneumatique, en étant synchronisés avec la rotation de l'arbre principal du moteur, des moyens de réglage sensibles audit paramètre permettant également de modifier la position angulaire d'ouverture et de fermeture des soupapes d'admission et d'échappement.

Ainsi, grâce à l'invention, le moteur fonctionne comme tout moteur à deux temps des différents types connus, suralimentés ou non, dans la plage de fonctionnement normal. En revanche, son fonctionnement est modifié de façon à assurer efficacement ou remplacer le balayage lorsqu'il se trouve en dehors de ladite plage de fonctionnement normal.

Ceci peut être obtenu en utilisant principalement une partie de la course de volume croissant de la ou de chaque chambre de travail en course d'aspiration d'air, en faisant varier de façon correspondante les positions angulaires d'ouverture et de fermeture des soupapes d'admission et d'échappement.

A cet effet, on avance de façon notable, dans le cycle, l'ouverture au moins de la soupape d'admission, par exemple au voisinage de la mi-course du piston mobile de la chambre de travail, et en modifiant en conséquence la distribution pour la soupape d'échappement. On obtient ainsi un accroissement de la quantité d'air frais disponible pour la combustion et, en avançant la fermeture des soupapes d'admission et d'échappement, une augmentation du rapport volumétrique de compression, ce qui facilite, en outre, si on le désire, un auto-allumage dans le cas préféré d'un moteur Diesel.

Par ailleurs, l'avancement de l'échappement dans le cycle augmente l'énergie de la bouffée d'échappement qui se produit à pression et température plus élevées. Dans le cas d'un moteur à deux temps suralimenté par un groupe turbo-compresseur, dont la turbine, qui entraîne le compresseur, est elle-même entraînée par les gaz d'échappement, le système d'échappement peut alors comporter avantageusement une liaison très directe entre la soupape d'échappement et la roue de turbine. On constate alors qu'à très faible vitesse, les impulsions de bouffée provoquent une rotation lente du groupe turbo-compresseur, ce qui, sans entraîner une suralimentation en air du moteur, provoque une ventilation de la chambre de travail, suffisante pour en évacuer les gaz de combustion et les y remplacer par de l'air frais.

Cette liaison directe peut être simplement assurée en utilisant des tubulures d'échappement coudées de façon régulière et débouchant dans le collecteur d'échappement, dont la section de passage, adaptée aux gros débits des régimes élevés, n'offre aucun obstacle aux impulsions de bouffée, selon une direction axiale du collecteur, ce dernier débouchant, sans interposition d'un distributeur, sur la roue de turbine.

Dans une forme de réalisation particulière de l'invention, les positions angulaires peuvent être agencées de façon que les soupapes d'admission et d'échappement ne se trouvent, au moins approximativement, pas simultanément à l'état d'ouverture effectif.

Dans une autre forme de réalisation de l'invention, les soupapes d'admission et d'échappement peuvent se trouver simultanément à l'état ouvert, des moyens uni-directionnels étant alors prévus sur l'échappement pour limiter ou empêcher un éventuel reflux de gaz, du système d'échappement à la ou chaque chambre de travail.

Dans cette autre forme de réalisation de l'invention, on peut utiliser des clapets ou autres moyens mécaniques anti-retour sur l'échappement mais on peut aussi utiliser soit l'effet d'inertie de la colonne de gaz mise en mouvement dans une tubulure reliant la sortie de gaz de la chambre de travail à un collecteur de gaz, soit un effet d'éjection provoqué par l'impulsion de gaz en provenance d'une chambre de travail sur la vidange d'une autre chambre de travail en situation de balayage, ce qui nécessite un nombre de chambres de travail de préférence supérieur à trois.

De façon avantageuse, lorsqu'on utilise l'inertie des gaz d'échappement, on peut alors prévoir des moyens de débit uni-directionnels dans le système d'échappement, et notamment dans des tubulures assurant les communications entre les sorties de gaz de la ou des chambres de travail et un collecteur de gaz, lesdits moyens uni-directionnels pouvant, par exemple, être constitués de tubulures fixes d'échappement suffisamment longues et dont le débouché est, de préférence, orienté dans le même sens que l'écoulement des gaz dans le collecteur.

On peut également utiliser l'effet d'éjection provoqué par l'impulsion de gaz, notamment lorsque le nombre des chambres de travail est supérieur à trois, en prévoyant, pour assurer la communication entre la sortie de gaz de la ou chaque chambre de travail et le collecteur de gaz, des tubulures possédant une forme de tuyère convergente ou convergente/divergente dont la sortie est orientée dans le même sens que l'écoulement des gaz dans le collecteur et de préférence de façon concentrique au collecteur.

Dans ce dernier cas, le collecteur de gaz peut avoir une section de passage sensiblement constante et suffisamment faible pour que, au régime de fonctionnement nominal, la vitesse d'écoulement de gaz à l'extrémité aval dudit collecteur dépasse le nombre de Mach de 0,4. La sortie aval du collecteur de gaz pourra communiquer avec l'entrée de la turbine du turbo-compresseur d'un moteur suralimenté, par l'intermédiaire d'un diffuseur abaissant la vitesse à un nombre de Mach inférieur à 0,4. En variante, la sortie aval du collecteur de gaz peut communiquer directement avec l'entrée de gaz de la turbine d'un turbo-compresseur de suralimentation, dont la volute de distribution de gaz est organisée de manière que la vitesse de gaz ne soit pas ralentie entre la sortie du collecteur et l'introduction dans le rotor de la turbine.

Un premier mode de mise en oeuvre des moteurs selon l'invention est caractérisé par le fait que,

a—lorsque le ou les paramètres susvisés ont des valeurs qui correspondent au(x) régime(s) de fonctionnement normaux ou nominaux du moteur, le moteur fonctionne de façon en soi connue selon le cycle à deux temps qui comporte:

—une phase de compression-combustion-détente pendant laquelle les soupapes d'admission et d'échappement sont fermées,

—une période d'échappement impulsive en fin de phase de détente pendant laquelle seules les soupapes d'échappement sont ouvertes,

—une période de balayage pendant laquelle les soupapes d'admission et d'échappement sont ouvertes simultanément et au cours de laquelle les gaz de combustion sont au moins partiellement remplacés par de l'air frais sous l'action de la différence des pressions, en moyenne positive, régnant de part et d'autre de la ou de chaque chambre de travail,

b—en revanche, lorsque le ou les paramètres de fonctionnement ont des valeurs qui correspondent à des régimes où ie moteur serait incapable de tourner ou de fonctionner convenablement, on avance la position angulaire de l'ouverture des soupapes par rapport à la position de volume maximal de la ou de chaque chambre de travail de telle manière que la communication de celle-ci avec le système d'admission du moteur puisse avoir lieu pendant, ou principalement pendant, une partie de la période de volume croissant de la chambre de travail, les tubulures organisant la communication de la chambre de travail avec le collecteur de gaz pouvant être agencées, notamment s'il existe une phase pendant laquelle les soupapes d'admission et d'échappement sont simultanément ouvertes, de manière qu'aucun écoulement inverse substantiel ne puisse se produire, du collecteur de gaz à la ou chaque chambre de travail.

La modification des positions angulaires de fonctionnement des soupapes d'admission et d'échappement peut être réalisée brusquement lorsque le paramètre franchit une valeur de seuil déterminée à l'avance. Eventuellement, plusieurs seuils successifs peuvent être prévus pour plusieurs modifications brusques de la position desdites soupapes.

En variante, lesdites positions angulaires peuvent être modifiées selon une fonction continue ou quasi-continue du paramètre susvisé pour varier progressivement entre la position correspondant aux régimes favorables jusqu'à la position correspondant au régime le moins favorable.

Il est à noter que l'on connaît déjà des moteurs à deux temps dont seule l'admission ou seul l'échappement se fait par l'intermédiaire d'une soupape à distribution réglable, l'échappement ou l'admission étant alors réalisé par des lumières fixes découvertes par le piston.

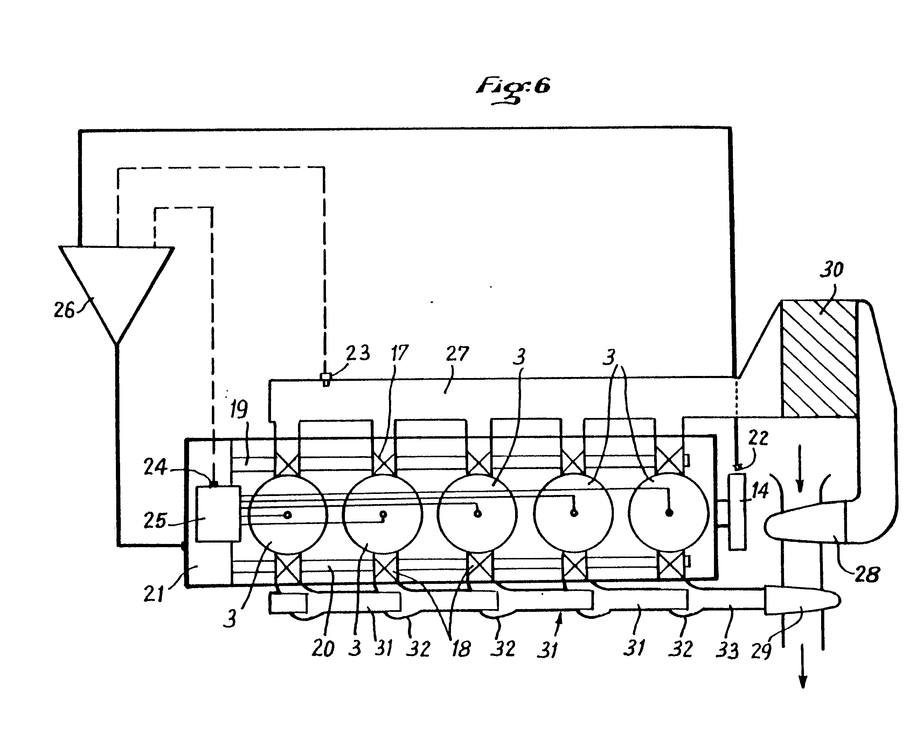

Au contraire, l'invention permet d'obtenir passagèrement un effet à quatre temps, par l'ouverture de la soupape d'admission anticipée mais postérieure à l'ouverture de la soupape d'échappement. Or cet effet est impossible tant avec des moteurs à lumière d'admission dont l'ouverture de l'admission est fixe et ne peut donc être anticipée (US—A—2.097.883, sauf figure 6) qu'avec des moteurs à lumière d'échappement dont l'ouverture de l'admission peut certes être avancée mais en n'étant plus postérieure à celle de l'échappement (US—A—2.097.883, figure 6).

Plus précisément, lors du fonctionnement normal du moteur conforme à l'invention, la course utile (de compression) du moteur conforme à l'invention est de 50% au moins de la course totale du ou de chaque piston. En mode de fonctionnement au démarrage ou à faible puissance, la course d'aspiration est de 50% au moins de la course totale et la course de compression peut être de l'ordre de 100% de cette course, le décalage angulaire OE—OA étant supérieur ou égal à 20° (degrés de rotation du vilebrequin).

Avec les moteurs à deux temps connus, à lumières d'admission et soupapes d'échappement à distribution variable, il n'est pas possible d'augmenter la course d'aspiration en raison des lumières fixes d'admission et, pour la même raison, on ne peut augmenter la course de compression que partiellement, c'est-à-dire sans pouvoir atteindre 100%.

Avec les moteurs à deux temps connus, à lumières d'échappement et soupapes d'admission à distribution variable, il est possible d'augmenter la course d'aspiration mais au détriment du décalage OE (ouverture d'échappement)—OA (ouverture d'admission). La bouffée d'échappement s'évacue donc vers l'admission, ce qui entraîne l'étouffement du moteur. De plus, à cause des lumières fixes d'échappement, la course de compression ne peut pas atteindre 100%.

Il a été proposé en outre de faire fonctionner un moteur alternativement selon un cycle à deux temps et selon un cycle à quatre temps, c'est-à-dire sans variation continue ou graduelle entre les deux modes de fonctionnement (voir JP—A—58 152 139).

D'autres avantages et caractéristiques de l'invention apparaîtront à la lecture de la description suivante, faite à titre d'exemple non limitatif et se référant au dessin annexé dans lequel:

la figure 1 représente une vue schématique d'une chambre de travail, en soi connue, d'un moteur à deux temps selon l'invention,

la figure 2 représente le diagramme angulaire des ouvertures et fermetures des soupapes d'admission d'échappement selon un cycle à deux temps connu de ce moteur,

la figure 3 représente une vue du diagramme lors du fonctionnement à faible puissance du moteur selon une forme de réalisation de l'invention,

la figure 4 représente le diagramme lors du fonctionnement à faible puissance selon une autre forme de réalisation de l'invention,

la figure 5 représente une vue schématique d'un moteur conçu pour un fonctionnement selon la figure 4, et

la figure 6 représente une vue schématique d'un autre moteur conçu pour un fonctionnement selon la figure 4.

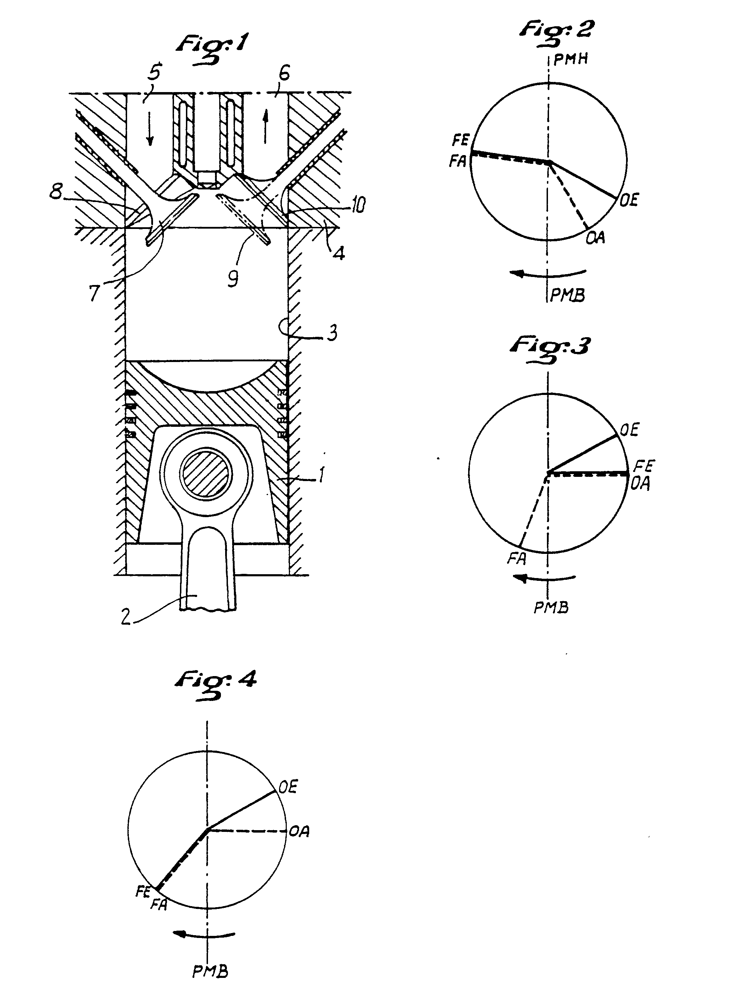

On se réfère tout d'abord aux figures 1 et 2.

Le moteur à l'occasion duquel l'invention va être décrite est une moteur à deux temps possédant une ou plusieurs chambre de travail du type décrit dans le susdit brevet français no. 2.338.385. Cette chambre de travail, représentée sur la figure 1, comporte une partie mobile, à savoir un piston coulissant 1 avec sa bielle 2, et une partie fixe, à savoir un cylindre 3 muni à sa partie supérieure d'une culasse 4. Celle-ci porte des passages d'admission 5 et d'échappement 6 susceptibles d'être ouverts ou obturés par une soupape d'admission 7 coopérant avec un siège 8 et par une soupape d'échappement 9 coopérant avec un siège 10. Le cylindre 3 est donc dépourvu de lumières dans sa paroi latérale, les sièges 8 et 10 étant placés dans la culasse 4.

Les autres parties du moteur, à savoir arbre principal, arbre à cames, culbuterie, ne seront pas décrites plus en détail car elles sont classiques. L'inclinaison des soupapes et leur taille sont agencées au mieux, comme par exemple dans le susdit brevet français no. 2.338.385, de façon à assurer, en régime normal, un fonctionnement aussi efficace que possible.

Le diagramme de la figure 2 représente le mode de fonctionnement connu de ce moteur. Ce diagramme, dont l'origine angulaire est le point mort bas PMB, est parcouru dans le sens des aiguilles d'une montre. Les positions angulaires sont les suivantes:

Ouverture d'échappement OE: $-60°$,
Fermeture d'échappement FE: $+100°$,
Ouverture d'admission OA: $-30°$,
Fermeture d'admission FA: $+100°$

On voit donc qu'après une course de descente de 120° à partir du point mort haut, la soupape d'échappement 9 s'ouvre (OE), la soupape d'admission 7 étant encore fermée pendant 30° correspondant à la période de bouffée. A partir de l'ouverture d'admission OA, la phase de bouffée est suivie d'une période de balayage de 130° pendant laquelle le renouvellement de la charge d'air est obtenu sous l'effet aérodynamique de la différence de pression positive observée entre le passage d'admission 5 et le passage d'échappement 6 de la chambre de travail. La phase fermée dure ensuite 200° et est répartie, dans l'exemple considéré, de façon asymétrique, avec une course de compression proprement dite de 80°, correspondant à un rapport volumétrique de compression de 8/1, alors que la course de combustion-détente dure 120° et correspond à un rapport volumétrique de détente de 12,9/1.

Ce cycle très dissymétrique permet, de manière connue, d'obtenir un rendement élevé associé à une puissance spécifique également élevée.

Un tel diagramme de distribution peut être obtenu, de façon connue, notamment à l'aide d'un arbre à cames lié mécaniquement à l'arbre ou vilebrequin et coopérant directement ou indirectement avec les soupapes et leurs moyens de rappel élastique, la coopération entre l'arbre à cames et les soupapes pouvant être mécanique (tiges-poussoirs, culbuteurs, etc.) ou par tout autre moyen tel que transmission hydraulique etc.

Il pourra également être obtenu par des moyens de commande faciles à faire varier en position angulaire tels que vérins hydrauliques ou pneumatiques ou encore électromagnétiques.

Conformément à l'invention, ces moyens de commande sont agencés de façon à pouvoir faire varier, en cours de fonctionnement du moteur, les positions angulaires d'ouverture et/ou de fermeture des soupapes d'admission et d'échappement, et ceci avec d'importantes variations angulaires.

A titre d'exemple, la liaison entre l'arbre à cames et chaque soupape pourra comporter des moyens de reglage variables (variation hydraulique de jeux, par exemple, ou déplacement d'axes de culbuteurs etc.);

—ou bien la liaison entre la came et l'arbre à cames ou entre la came et l'arbre du moteur pourra également être variable d'une façon en soi connue;

—on peut également utiliser des arbres à cames à double profil de came et susceptibles de passer de l'un à l'autre profil en cours de fonctionnement, par une translation de l'arbre à cames;

—dans le cas de commande directe des soupapes par des vérins hydrauliques, pneumatiques ou électromagnétiques, on peut faire varier la position angulaire d'ouverture et de fermeture de la soupape par des moyens de pilotage connus en soi, utilisant, par exemple, des capteurs de position de l'arbre du moteur.

On se réfère maintenant à la figure 3, à l'occasion de laquelle on va décrire un premier mode de mise en oeuvre de l'invention.

Conformément à l'invention, le moteur décrit à titre d'exemple, fonctionne selon le cycle à deux temps de la figure 2 tant qu'un paramètre de fonctionnement du moteur se trouve situé au-delà d'un certain seuil. Ce paramètre peut être, par exemple, la vitesse de rotation du vilebrequin. Lorsque cette vitesse de rotation tombe au-dessous de ce seuil, les moyens de commande des soupapes selon l'invention provoquent immédiatement la modification des positions angulaires d'ouverture et de fermeture des soupapes d'admission et d'échappement conforme à la figure 3. Sur celle-ci, les angles d.v. (degré de rotation du vilebrequin) sont les suivants:

OE: −120°
FE: −90°
OA: −90°
FA: +20°

On voit donc que l'ouverture de la soupape d'échappement 9 (OE) est avancée de 60° vers le point mort haut et ne dure que 30° pendant lesquels l'évacuation partielle des gaz brûlés s'effectue sous forme de bouffée pendant la période de décharge par la détente faisant suite à l'ouverture de la soupape d'échappement 9. A la fin de ces 30°, la soupape d'échappement 9 se ferme (FE).

De toute façon, le décalge angulaire (vu sur le vilebrequin) entre OA et OE, qui est égal à 30° dans cet exemple, est supérieur à la limite de 20° qui a été fixée ci-dessus.

La période de balayage est donc supprimée et remplacée par une période d'aspiration d'air frais à l'ouverture de la soupape d'admission 7 (OA) qui se fait en même temps que la fermeture de la soupape d'échappement 9 (FE), cette période d'aspiration durant 110°, ce qui correspond, en volume, à la moitié du volume maximal de la chambre de travail et, en masse, à une proportion de 2/3 d'air frais, ce qui suffit largement à brûler la quantité de carburant correspondant au régime de fonctionnement au ralenti.

Après la fermeture de la soupape d'admission (FA), se produit la phase de compression puis, au voisinage du point mort haut (PMH), la combustion, et le cycle recommence.

L'admission et l'échappement n'étant jamais ouverts simultanément, le niveau de pression régnant dans le collecteur d'échappement ne joue plus aucun rôle et le moteur ainsi conçu, même s'il n'est pas suralimenté, pourra démarrer et fonctionner de façon stable au ralenti.

On notera, en outre, que la course de compression part du voisinage du point mort bas PMB et que, de ce fait, le rapport volumétrique de compression est porté à une valeur accrue de 15,6/1 (au lieu de 8/1), ce qui assure l'auto-allumage du mélange air-combustible même en aspiration atmosphérique s'agissant d'un moteur Diesel.

Dans la première forme de réalisation qui vient d'être décrite, le diagramme de distribution de la figure 3 pourra être réalisé facilement si on utilise des moyens de commande drecte des soupapes par vérins hydrauliques ou électromagnétiques. En effet, il sera possible, lorsque la vitesse de rotation du vilebrequin sera au-dessous de la valeur de seuil susindiquée, d'obtenir de grandes vitesses angulaires d'ouverture fermeture des soupapes et notamment de la soupape d'échappement 9. Cette vitesse d'ouverture et de fermeture pourra encore être accrue en utilisant des éléments de liaison hydrauliques entre le vérin et la soupape, ces éléments de liaison, associés à des moyens de distribution hydrauliques connus, permettant de tronquer ou abréger la levée de la soupape.

Si on utilise une commande de soupape classique (arbre à cames coopérant avec des moyens de rappel élastique), le diagramme de distribution de la figure 3 pourra être parfois plus difficile à réaliser, notamment si les vitesses sont relativement importantes, car la came de montée et descente de la soupape de fermeture devra avoir une pente particulièrement raide.

Dans le cas d'un moteur ayant un arbre à cames, on pourra donc préférer la forme de réalisation qui va maintenant être décrite en se référant au diagramme de la figure 4.

Dans cette forme de réalisation, lorsque la vitesse de rotation tombe au-dessous du seuil fixé, on décale de 60° en arrière, c'est-à-dire dans le sens inverse des aiguilles d'une montre, l'arbre à cames de sorte que l'on obtient le diagramme représenté sur lequel:

OE: −120°
FE: +40°
OA: −90°
FA: +40°

Comme dans le mode de réalisation de la figure 3, le décalage angulaire entre OA et OE est de 30°. Toutefois, contrairement au moteur illustré à propos de la figure 3, la période de bouffée est suivie par une période mixte, à partir de l'ouverture d'admission OA, où les soupapes d'admission 7 et d'échappement 9 sont ouvertes simultanément.

Pour éviter un éventuel reflux néfaste des gaz d'échappement en provenance du collecteur d'échappement pendant la course descendante du piston si, par exemple, la pression dans le collecteur d'échappement est supérieure à la pression d'admission, ce qui empêcherait le ralenti stable du moteur, on prévoit, dans cette forme de réalisation, de monter sur l'échappement des moyens unidirectionnels tels que, par exemple, des clapets anti-retour directement en aval de la ou des soupapes d'échappement, dans la tubulure reliant la ou chaque chambre de travail au collecteur d'échappement.

Ces clapets peuvent être remplacés par tous moyens équivalents tels que des diodes aérodynamiques aménagées dans lesdites tubulures.

Dans une autre forme de réalisation de l'invention, le diagramme des soupapes d'admission et d'échappement est, par exemple, le même que celui de la figure 4, c'est-à-dire qu'il existe une période, au moins pendant une partie de la descente du piston, pendant laquelle les soupapes d'admission 7 et d'échappement 9 sont simultanément ouvertes.

Conformément à une première variante de cette autre forme de réalisation de l'invention, on évite le reflux en tirant parti de l'effet d'inertie de la colonne de gaz mise en mouvement dans la tubulure reliant la sortie de gaz de la ou chaque chambre de travail au collecteur de gaz, par l'impulsion produite lors de l'évacuation (bouffée) des gaz en fin de la course de détente dès l'ouverture de la soupape d'échappement 9.

Cet effet, bien connu sous le nom d'effet Kadenacy, nécessite un agencement particulier des tubulures (en diamètre et en longueur) pour être optimal.

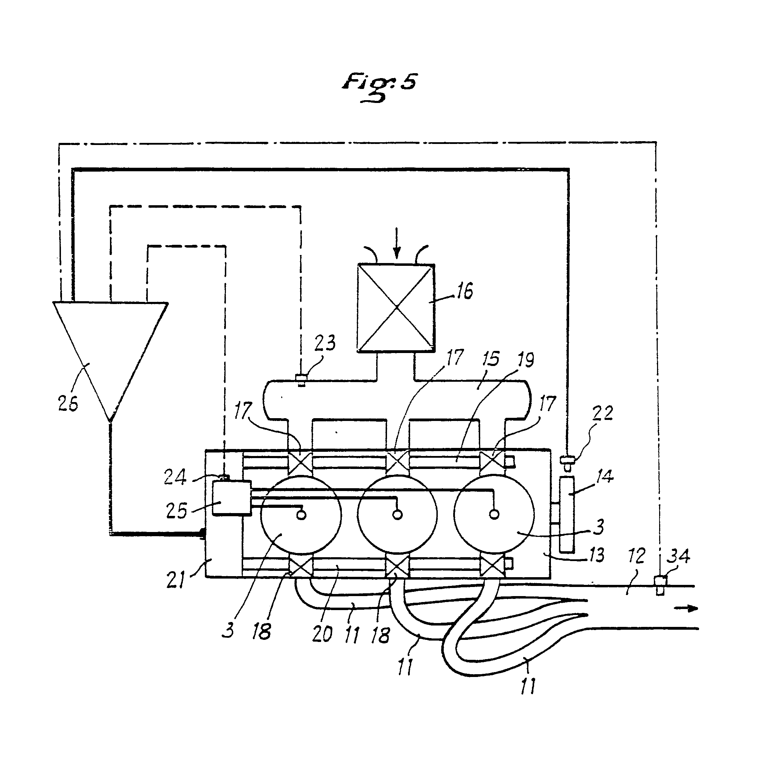

Si les tubulures 11 sont agencées pour déboucher dans le sens de l'écoulement des gaz dans un collecteur d'échappement 12 rectiligne, comme on le voit sur la figure 5, on obtient alors, même aux très faibles vitesses du moteur et en l'absence de l'effet Kadenacy, des bouffées d'échappement sous forme d'impulsions qui par courent librement le collecteur d'échappement 12. Dans le cas où le moteur comporte, en bout du collecteur 12, une turbine 29 d'un groupe turbocompresseur 28—29, comme représenté sur la figure 6, ces bouffées sont suffisantes, notamment si aucun obstacle tel que coude, volute ou distributeur n'est disposé devant la roue de turbine, pour provoquer par un effet, en quelque sorte, de turbine Pelton, une rotation du groupe turbo-compresseur assurant, dans le collecteur d'admission 27, une ventilation des chambres 3 autorisant un fonctionnement assuré et souple du moteur aux plus bas régimes et notamment au démarrage.

On voit également, sur la figure 5, le schéma du moteur selon l'invention, qui comporte, dans le bloc 13 dans lequel tourne l'arbre moteur ou vilebrequin 14, trois chambres de travail ou cylindres 3 alimentés par un collecteur d'air 15 dont l'entrée possède un filtre à air 16. Les soupapes d'admission 17 et d'échappement 18 sont entraînées, par l'intermédiaire d'arbres à cames 19, 20, par des moyens de commande 21. Ce moteur comporte un capteur 22 de vitesse de rotation de l'arbre 14, un capteur 23 de pression d'admission d'air, un capteur 24 de la quantité de carburant introduite par cycle dans les chambres de travail 3 par des moyens d'introduction de carburant 25 et éventuellement un capteur 34 de la température d'échappement. Des moyens électroniques 26 de réglage des moyens de commande 21 sont sensibles aux capteurs 22 et/ou 23 et/ou 24 et/ou 34 et, en fonction du résultat d'une comparaison entre la valeur du paramètre simple ou complexe détecté par le ou les capteurs et une valeur de seuil, règlent l'état des moyens de commande 21 pour le fonctionnement normal à deux temps ou le fonctionnement modifié selon l'invention.

Dans une autre variante de cette forme de réalisation de l'invention, on tire parti de l'effet d'éjection provoqué par l'impulsion en provenance d'une chambre de travail ou cylindre 3 sur la vidange d'une autre chambre de travail en situation de balayage. Ceci nécessite que le nombre des chambres de travail soit supérieur à 3, compte tenu de la durée angulaire de ce processus.

Un tel moteur est représenté sur la figure 6 sur laquelle les éléments similaires à ceux de la figure 5 portent, sauf indication contraire, les mêmes chiffres de référence.

Le moteur représenté comporte cinq chambres de travail 3 alimentées en air par un collecteur d'admission d'air 27 recevant l'air sous pression de suralimentation depuis un compresseur 28 d'un groupe turbo-compresseur dont la turbine 29 est entraînée par les gaz d'échappement, l'air comprimé étant d'abord refroidi par un refroidisseur d'air 30. Le système d'échappement 31 utilise l'effet d'éjection des gaz.

Cet effet d'éjection peut être obtenu avec des moyens connus du type de ceux décrits dans les brevets français no 2.378.178, 2.415.200, 2.478.736.

Un tel agencement, représenté sur la figure 6, nécessite les caractéristiques constructives suivantes:

A—une liaison extrêmement courte et de faible volume entre la sortie des chambres de travail et le collecteur de gaz 31, grâce à des tubulures 32 en forme de tuyères convergentes ou convergentes/divergentes dont la sortie est orientée selon le sens de l'écoulement dans le collecteur de gaz.

Le très faible volume et l'étranglement de la section de passage de ces tubulures 32 ont pour effet de favoriser la récupération de l'énergie disponible dans les chambres de travail au début de la phase de bouffée d'échappement. La pression dans la tubulure s'élève en effet très rapidement dès l'ouverture de la soupape d'échappement et se rapproche ainsi de la pression régnant dans la chambre de travail, ce qui réduit considérablement la perte d'énergie par laminage au passage de ladite soupape d'échappement.

L'énergie utilisable disponible dans les chambres de travail en fin de détente est ainsi préservée de façon maximale. L'accélération dans les tubulures convergentes 32 et l'orientation de celles-ci selon le sens de l'écoulement dans le collecteur de gaz 31 permet de convertir efficacement cette énergie potentielle en énergie cinétique contribuant à accélérer la colonne de gaz qui s'écoule dans ledit collecteur 31.

B—Le regroupement de l'échappement d'une pluralité de chambres de travail dans un collecteur de gaz 31 dont le diamètre est faible par rapport au diamètre du piston (généralement de l'ordre de la moitié).

Le dimensionnement du collecteur peut être exprimé ainsi:

$$Se=(n \cdot Sp) \times \frac{Vp}{Ve} \times \frac{\rho'2}{\rho5} \times a,$$

relation dans laquelle:

Se=section du collecteur de gaz

Sp=surface transversale de chaque piston

n=nombre de pistons

$n \cdot Sp$=surface totale des pistons dont les cylindres sont reliés à un même collecteur de gaz

Vp=vitesse moyenne de chaque piston

Ve=vitesse des gaz à l'extrémité aval du collecteur de gaz

$\rho'2$=densité de l'air d'admission

$\rho5$=densité des gaz d'échappement

a=coefficient de débit du moteur (compris entre 0,5 et 1,2);

le nombre de Mach de l'écoulement des gaz, à l'extrémité aval du collecteur, étant:

$$m=\frac{Ve}{a5}, \text{ où}$$

$$a5=\sqrt{1,33 \times 287 \times T5} \text{ avec}$$

T5=temperature d'échappement en °K.
Si T5=873°K (600°C), a5=577 m/s,
$m$=0,3 et Ve=173 m/s.

C—Le réglage de l'ordre d'allumage des différentes chambres de travail regroupées sur le même collecteur de gaz de façon à organiser une injection de quantité de mouvement, en provenance de chaque chambre de travail, la plus régulière possible et la moins pertubatrice de l'échappement d'une chambre sur l'autre.

D—Une liaison 33, aussi simple et courte que possible, entre l'extrémité aval du collecteur (dans le sens de l'écoulement des gaz) et l'entrée de la turbine 29 pour éviter au maximum les pertes de pression totale de l'écoulement à grande vitesse, soit par frottement, soit par accident de parcours (courbure, ou variation brusque de section); à titre d'exemple, la perte de pression totale par frottement d'un écoulement de gaz, ayant un nombre de Mach égal à 0,7, est de l'ordre de 1% par unité de longueur égale au diamètre du collecteur.

E—L'interposition éventuelle, entre l'extrémité aval du collecteur de gaz et l'entrée de la turbine, d'un diffuseur capable de ralentir l'écoulement à un nombre de Mach de l'ordre de 0,25.

Mais constatant que l'écoulement sera alors à nouveau accéléré jusqu'au nombre de Mach de l'ordre de 1 (généralement dans un anneau du tuyères fixe, appelé, "distributeur") avant de pénétrer dans la roue de turbine, il est clair qu'il peut être préférable de supprimer ce ralentissement dans le diffuseur puis l'accélération dans le distributeur en remplaçant la susdite caractéristique E par la suivante:

E'—L'organisation du carter d'entrée des gaz à la turbine pour maintenir sensiblement constante la vitesse des gaz jusqu'à leur entrée dans la roue de détente de la turbine.

On notera que l'ouverture avancée de la soupape d'échappement, lors du mode de fonctionnement à basse puissance du moteur conforme à l'invention,—avance de 60° dans les exemples indiqués ci-dessus conduisant à commencer l'ouverture de la soupape d'échappement (OE) 120° avant le PMB, c'est-à-dire bien avant la fin de la course de détente du piston—présente de nombreux avantages tels que les suivants:

—la pression et la température régnant dans la chambre de travail au moment de l'ouverture de la soupape d'échappement ainsi que la masse de gaz évacuée étant plus élevées, la bouffée d'échappement sera plus active: l'entraînement et l'acccélération de la turbine de suralimentation seront très améliorés, et ceci plus particulièrement encore si le système d'échappement est organisé selon le deuxième mode de réalisation de l'invention décrit ci-dessus,

—pour la même raison, l'auto-balayage du moteur à 2 temps sera amélioré aux basses puissances de fonctionnement du moteur,

—pour une puissance sur l'arbre principal donnée, la réduction de la course de détente entraîne une consommation de combustible accrue et donc une augmentation de la température des gaz évacuant les chambres de travail, facteur également favorable à l'entraînement de la turbine de suralimentation.

La liaison directe 33 entre le collecteur rectiligne et l'entrée de la turbine 29 permet en outre, aux plus bas régimes, de bénéficier des impulsions dues aux bouffées d'échappement, et ceci en l'absence de tout effet d'éjection ou d'inertie, pour entraîner, grâce au groupe turbo-compresseur, une ventilation des chambres de travail qui suffit à l'obtention d'un bon balayage.

## Revendications

1. Moteur à combustion interne à au moins une chambre de travail (3) de volume variable limitée par un piston dans un cylindre et fonctionnant selon le cycle à deux temps, moteur dans lequel l'entrée d'air et la sortie de gaz de la chambre de travail (3) sont munies de soupapes d'admission (7) et d'échappement (9) synchronisées avec la rotation de l'arbre du moteur, les soupapes d'admission et d'échappement (7, 9) étant actionnées par des moyens de commande agencés pour pouvoir faire varier en fonctionnement la position angulaire, vue sur l'arbre du moteur, de leur ouverture et éventuellement de leur fermeture en fonction d'au moins un paramètre, auquel sont sensibles lesdits moyens de commande, caractérisé en ce que

(a) le cylindre est dépourvu de lumières latérales;

(b) le moteur est dépourvu d'un dispositif de balayage externe autre qu'un turbo-compresseur de suralimentation, lequel est lui-même facultatif, pour assurer le démarrage et le fonctionnement à faible puissance;

(c) le susdit paramètre est un paramètre de fonctionnement du moteur lié à la puissance de celui-ci;

(d) les moyens de commande sont agencés pour avancer le début d'ouverture de la soupape d'admission, mais en le maintenant postérieur au début de l'ouverture de la soupape d'échappement, au démarrage et en fonctionnement à faible puissance, par rapport aux conditions de marche normale, afin d'obtenir à tout régime l'introduction d'une quantité suffisante d'air frais dans la ou chaque chambre de travail (3).

2. Moteur selon la revendication 1, caractérisé en ce que, au démarrage et en fonctionnement à faible puissance, le décalage entre le début d'ouverture de la soupape d'admission et le début d'ouverture de la soupape d'échappement est au moins égal à 30°.

3. Moteur selon la revendication 2, caractérisé en ce qu'il est suralimenté par un turbo-compresseur dont l'entrée de gaz de la turbine communique avec la sortie de la chambre de travail et la sortie d'air du compresseur entraîné mécaniquement par la turbine communique avec l'entrée d'air de la chambre de travail.

4. Moteur selon la revendication 1, caractérisé en ce que le paramètre lié au fonctionnement du moteur est:

—la valeur de la pression de suralimentation, dans le cas d'un moteur à deux temps suralimenté,

—ou la quantité de carburant introduit par cycle dans la ou les chambres de travail,

—ou la vitesse de rotation de l'arbre principal du moteur,

—ou la température d'échappement,

—ou la valeur effective de la différence entre les pressions d'admission et d'échappement,

des moyens étant prévus pour détecter la valeur du paramètre.

5. Moteur selon la revendication 1, caractérisé en ce que les moyens de commande sont de type mécanique et entraînés directement par l'arbre principal du moteur par une chaîne cinématique, notamment arbre à cames, des moyens de réglage mécaniques étant prévus pour modifier les positions angulaires d'ouverture et éventuellement de fermeture des soupapes (7, 9) concernées.

6. Moteur selon la revendication 1, caractérisé en ce que les moyens de commande des soupapes (7, 9) sont de type électrique, hydraulique ou pneumatique, des moyens de réglage sensibles audit paramètre leur étant associés pour modifier la position angulaire d'ouverture et éventuellement de fermeture des soupapes (7, 9).

7. Moteur selon la revendication 1, caractérisé en ce que, lorsque lesdits moyens de commande sont mis en oeuvre, la position angulaire de l'ouverture et éventuellement de la fermeture des soupapes d'admission et d'échappement (7, 9) est modifiée de façon que la soupape d'admission (7) soit ouverte principalement pendant une partie au moins de la course de volume croissant de la chambre de travail pour provoquer une aspiration de l'air.

8. Moteur selon la revendication 7, caractérisé en ce que, lorsque lesdits moyens de commande sont mis en oeuvre, le taux de compression correspond à la totalité de la course de compression du ou de chaque piston.

9. Moteur selon la revendication 7, caractérisé en ce que la position d'ouverture de la soupape d'admission est amenée au voisinage de la mi-course du ou de chaque piston.

10. Moteur selon la revendication 9, caractérisé en ce que lesdits moyens de commande sont agencés pour que les soupapes d'admission et d'échappement (7, 9) ne se trouvent alors, au moins approximativement, pas simultanément à l'état d'ouverture.

11. Moteur selon la revendication 7, caractérisé en ce que lesdits moyens de commande sont agencés pour que les soupapes d'admission et d'échappement (7, 9) se trouvent simultanément à l'état ouvert pendant une partie du cycle du moteur, le moteur comportant dans son système d'échappement des moyens uni-directionnels pour limiter ou empêcher un éventuel reflux de gaz depuis le système d'échappement.

12. Moteur selon la revendication 11, caractérisé en ce que lesdits moyens uni-directionnels comportent des moyens mécaniques anti-retour.

13. Moteur selon la revendication 11, caractérisé en ce que lesdits moyens uni-directionnels comportent des tubulures fixes d'échappement de longueur suffisante pour utiliser l'effet d'inertie de la colonne de gaz mise en mouvement dans la tubulure.

14. Moteur selon la revendication 11, caractérisé en ce qu'il comporte plus de trois chambres de travail et des moyens utilisant un effet d'éjection provoqué par l'impulsion de gaz en provenance d'une chambre de travail sur la vidange d'une autre chambre de travail en situation de balayage.

15. Moteur selon la revendication 14, caractérisé en ce qu'il comporte des tubulures d'échappement assurant la communication entre la sortie de gaz de la chambre de travail et le collecteur de gaz et possédant une forme de tuyère convergente ou convergente-divergente dont la sortie est orientée dans le même sens que l'écoulement de gaz dans le collecteur.

16. Moteur selon la revendication 12, caractérisé en ce que les tubulures d'échappement débouchent dans le même sens que l'écoulement des gaz dans le collecteur de gaz et de préférence de façon concentrique par rapport à celui-ci.

17. Moteur selon la revendication 3, caractérisé en ce que le système d'échappement comporte une liaison très directe entre la soupape d'échappement (9) et la roue de la turbine (29) de suralimentation pour entraîner une rotation du groupe turbo-compresseur par les seules impulsions de bouffée d'échappement à bas régime.

18. Moteur selon la revendication 15, caractérisé en ce que la section de passage du collecteur de gaz est sensiblement constante et suffisamment faible pour que, au régime de fonctionnement nominal, la vitesse d'écoulement des gaz à l'extrémité aval du collecteur dépasse le nombre de Mach de 0,4.

19. Moteur suralimenté selon la revendication 18, caractérisé en ce que la sortie aval du collecteur de gaz communique avec l'entrée de la turbine du groupe turbo-compresseur de suralimentation par l'intermédiaire d'un diffuseur abaissant la vitesse à un nombre de Mach inférieur à 0,4.

20. Moteur suralimenté selon la revendication 17, caractérisé en ce que la sortie aval du collecteur de gaz communique directement avec l'entrée de gaz du turbo-compresseur de suralimentation, dont la volute de distribution de gaz est organisée de manière que la vitesse de gaz ne soit pas notablement ralentie entre la sortie du collecteur et l'introduction dans le rotor de la turbine.

**Patentansprüche**

1. Zweitaktbrennkraftmaschine mit wenigstens einer durch einen Kolben in einem Zylinder begrenzten Arbeitskammer (3) veränderlichen Volumens, in welcher Maschine der Lufteinlass und der Gasauslass der Arbeitskammer (3) mit Einlass- (7) und Auslassventilen (9) versehen sind, die mit der Drehung der Motorwelle synchronisiert sind, indem die Ein- und Auslassventile (7, 9) durch Steuereinrichtungen betötigt sind, welche derart ausgebildet sind, dass während des Betriebes durch sie die Winkellage, bezogen auf die Motorwelle, ihres Öffnens, und gegebenenfalls ihres Schliessens, in Abhängigkeit von mindestens einem Parameter veränderbar ist, auf den die Steuereinrichtungen empfindlich sind, dadurch gekennzeichnet, dass

(a) der Zylinder frei von seitlichen Öffnungen ist;

(b) die Brennkraftmaschine frei von einer äusseren Spüleinrichtung, ausser einem Auflade-Turbokompressor, ist, der selbst nur fakultativ vorgesehen ist, um den Start und den Betrieb mit geringer Leistung zu sichern;

(c) der oberwähnte Parameter ist ein mit der Motorleistung verknüpfter Betriebsparameter der Brennkraftmaschine;

(d) die Steuereinrichtungen sind zum Vorverlegen des Beginnes des Öffnens der Einlassventiles ausgebildet, jedoch so, dass sie es zu Beginn des Öffnens des Auslassventiles, beim Start und beim Betrieb mit geringer Leistung gegenüber den normalen Betriebsbedingungen nacheilend halten, um bei jeder Betriebsweise die Einführung einer genügenden Menge an Frischluft in die bzw. jede Arbeitskammer (3) zu erhalten.

2. Brennkraftmaschine nach Anspruch 1, dadurch gekennzeichnet, dass das Versatzmass zwischen dem Beginn des Öffnens des Einlassventiles und dem Beginn des Öffnens des Auslassventiles beim Start und Beim Betrieb mit geringer Leistung wenigstens gleich 30° ist.

3. Brennkraftmaschine nach Anspruch 2, dadurch gekennzeichnet, dass sie von einem Turbo-Kompressor aufgeladen wird, dessen Gaseinlass der Turbine mit dem Auslass der Arbeitskammer in Verbindung steht und der Luftauslass des mechanisch durch die Turbine angetriebenen Kompressors mit dem Lufteinlass der Arbeitskammer verbunden ist.

4. Brennkraftmaschine nach Anspruch 1, dadurch gekennzeichnet, dass der mit dem Betrieb der Brennkraftmaschine verknüpfte Parameter ist:

—der Aufladungsdruckwert im Falle eines aufgeladenen Zweitaktmotors,

—oder die pro Zyklus in die Arbeitskammer(n) eingeführte Brennstoffmenge,

—oder die Drehgeschwindigkeit der Motorhauptwelle,

—oder die Auspufftemperatur,

—oder der Effektivwert der Differenz zwischen Ein- und Auslassdruck,

wobei Einrichtungen zum Feststellen des Parameterwertes vorgesehen sind.

5. Brennkraftmaschine nach Anspruch 1, dadurch gekennzeichnet, dass die Steuereinrichtungen mechanischer Art und unmittelbar von der Motorhauptwelle über eine kinematische Kette angetrieben sind, insbesondere eine Nokkenwelle, wobei mechanische Regeleinrichtungen zum Verändern der Winkellagen des Öffnens und gegebenenfalls des Schliessens der betreffenden Ventile (7, 9) vorgesehen sind.

6. Brennkraftmaschine nach Anspruch 1, dadurch gekennzeichnet, dass die Steuereinrichtungen für die Ventile (7, 9) elektrischer, hydraulischer oder pneumatischer Art sind, wobei für den Parameter empfindliche Regeleinrichtungen ihnen zugeordnet sind, um die Winkellage des Öffnens und gegebenenfalls des Schliessens der Ventile (7, 9) vu verändern.

7. Brennkraftmaschine nach Anspruch 1, dadurch gekennzeichnet, dass die Winkellage des Öffnens und gegebenenfalls des Schliessens der Ein- und Auslassventile (8, 9) bei Betrieb der Steuereinrichtungen derart verändert werden, dass das Einlassventil (7) hauptsächlich während wenigstens eines Teiles des Hubes mit anwachsendem Volumen der Arbeitskammer offen steht, um eine Luftansaugung zu bewirken.

8. Brennkraftmaschine nach Anspruch 7, dass das Verdichtungsverhältnis bei Betrieb der Steuereinrichtungen der Gesamtheit des Kompressionshubes des oder jedes Kolbens entspricht.

9. Brennkraftmaschine nach Anspruch 7, dadurch gekennzeichnet, dass die Offenstellung des Einlassventiles nahe dem halben Hube des oder jedes Kolbens herbeigeführt wird.

10. Brennkraftmaschine nach Anspruch 9, dadurch gekennzeichnet, dass die Steuereinrichtungen derart ausgebildet sind, dass die Ein- und Auslassventile (7, 9) sich nicht wenigstens annähernd gleichzeitig im Offenzustand befinden.

11. Brennkraftmaschine nach Anspruch 7, dadurch gekennzeichnet, dass die Steuereinrichtungen derart ausgebildet sind, dass die Ein- und Auslassventile (7, 9) sich während eines Teiles des Motorzyklus gleichzeitig im Offenzustand befinden, wobei die Brennkraftmaschine in ihrem Auspuffsystem Einrichtungen für eine Strömung in einer Richtung zum Begrenzen oder Verhindern einer eventuellen Rückströmung von Gas vom Auspuffsystem aufweist.

12. Brennkraftmaschine nach Anspruch 11, dadurch gekennzeichnet, dass die Einrichtungen für eine Strömung in einer Richtung mechanische Rückschlagventile aufweisen.

13. Brennkraftmaschine nach Anspruch 11, dadurch gekennzeichnet, dass die Einrichtungen für eine Strömung in einer Richtung starre Auspuffrohre einer ausreichenden Länge zum Ausnützen des Trägheitseffektes der in dem Rohre sich bewegenden Gassäule aufweisen.

14. Brennkraftmaschine nach Anspruch 11, dadurch gekennzeichnet, dass sie mehr als drei Arbeitskammern und Einrichtungen aufweist, die einen Strahleffekt ausnützen, welcher durch den aus einer Arbeitskammer kommenden Gasimpuls auf die Entleerung einer anderen, im Zustande der Spülung befindlichen Arbeitskammer hervorgerufen wird.

15. Brennkraftmaschine nach Anspruch 14, dadurch gekennzeichnet, dass sie Auspuffrohre aufweist, die die Verbindung zwischen dem Gasauslass der Arbeitskammer und dem Gassammler sichern und eine konvergierende oder konvergierend-divergierende Düsenform besitzen, deren Ausgang im selben Sinne ausgerichtet ist, wie die Strömung des Gases im Sammler.

16. Brennkraftmaschine nach Anspruch 12, dadurch gekennzeichnet, dass die Auspuffrohre in dieselbe Richtung ausmünden, wie die Gasströmung im Sammler und vorzugsweise konzentrisch zu diesem.

17. Brennkraftmaschine nach Anspruch 3, dadurch gekennzeichnet, dass das Auspuffsystem eine sehr direkte Verbindung zwischen dem Auslassventil (9) und dem Aufladungsturbinenrad (29) besitzt, um eine Drehung der Turbo-Kompressor-Gruppe einzig durch die Auspuffverpuffungsimpulse im Langsamlauf herbeizuführen.

18. Brennkraftmaschine nach Anspruch 15, dadurch gekennzeichnet, dass der Durchlassquerschnitt des Gassammlers im wesentlichen konstant und ausreichend gering ist, dass die Strömungsgeschwindigkeit des Gases, bei Normalbetrieb, am stromabwärtsseitigen Ende des Sammlers die Mach-Zahl von 0,4 übersteigt.

19. Aufgeladener Motor nach Anspruch 18, dadurch gekennzeichnet, dass der stromabwärtsseitige Auslass des Gassammlers mit dem Einlass der Turbine der Auflade-Turbo-Kompressor-Gruppe über einen Diffusor in Verbindung steht, der die Geschwindigkeit auf eine Mach-Zahl unter 0,4 herabsetzt.

20. Aufgeladener Motor nach Anspruch 17, dadurch gekennzeichnet, dass der stromabwärtsseitige Auslass des Gassammlers mit dem Gaseinlass des Auflade-Turbo-Kompressors unmittelbat in Verbindung steht, dessen Gasspiralverteiler derart aufgebaut ist, dass die Gasgeschwindigkeit zwischen dem Sammlerauslass und der Einführung in den Rotor der Turbine nicht merkbar verringert wird.

**Claims**

1. An internal combustion engine having at least one work chamber (3) of variable volume limited by a piston in a cylinder and operating according to the two-stroke cycle, in which engine the air intake and the gas exhaust of the work chamber (3) are provided with intake and exhaust valves (7, 9) synchronized with the rotation of the shaft of the engine, the intake and exhaust valves (7, 9) being actuated by control means adapted to be capable of varying in operation the angular position, seen from the shaft of the engine, of their opening and possibly their closure as a function of at least one parameter to which said control means are responsive, characterised in that

(a) the cylinder is devoid of lateral ports;

(b) the engine is devoid of an external scavenging device other than a supercharging turbocompressor which itself is optional, for ensuring the starting up and the operation at low power;

(c) the above-said parameter is a parameter of operation of the engine which is bound to the power of the latter;

(d) the control means are adapted to advance the beginning of opening of the intake valve, but in maintaining it subsequent to the beginning of the opening of the exhaust valve when starting up and in operation at low power, relative to the normal conditions of operation, so as to obtain in all conditions of operation the introduction of a sufficient quantity of fresh air into the or each work chamber (3).

2. An engine according to claim 1, characterised in that when starting up and when operating at low power, the stagger between the beginning of the opening of the intake valve and the beginning of the opening of the exhaust valve is at least equal to 30°.

3. An engine according to claim 2, characterised in that it is supercharged by a turbo-compressor whose gas inlet of the turbine communicates with the outlet of the work chamber and the air outlet of the compressor mechanically driven by the turbine communicates with the air intake of the work chamber.

4. An engine according to claim 1, characterised in that the parameter relating to the operation of the engine is:

the value of the supercharging pressure in the case of a supercharged two-stroke engine,

or the quantity of fuel introduced per cycle in the work chamber or chambers,

or the speed of rotation of the main shaft of the engine,

or the exhaust temperature,

or the effective value of the difference between the intake and exhaust pressures,

means being provided for detecting the value of the parameter.

5. An engine according to claim 1, characterised in that the control means are of the mechanical type and are directly driven by the main shaft of the engine through a kinematic chain, in particular a camshaft, mechanical regulating means being provided for modifying the angular positions of opening and optionally closing the concerned valves (7, 9).

6. An engine according to claim 1, characterised in that the control means of the valves (7, 9) are of the electric, hydraulic or pneumatic type, regulating means responsive to said parameter being associated therewith for modifying the angular position for the opening and optionally the closure of the valves (7, 9).

7. An engine according to claim 1, characterised in that when said control means are employed, the angular position of the opening and optionally of the closure of the intake and exhaust valves (7, 9) is so modified that the intake valve (7) is open principally during at least a part of the stroke relating to the increasing volume of the work chamber for producing an aspiration of air.

8. An engine according to claim 7, characterised in that when said control means are employed, the compression rate corresponds to the whole of the compression stroke of the or each piston.

9. An engine according to claim 7, characterised in that the opening position of the intake valve is brought to the neighbourhood of the middle of the stroke of the or each piston.

10. An engine according to claim 9, characterised in that said control means are so arranged that the intake and exhaust valves (7, 9) are then not, at least approximately, simultaneously in the open state.

11. An engine according to claim 7, characterised in that said control means are so arranged that the intake and exhaust valves (7, 9) are simultaneously in the open state during a part of the cycle of the engine, the engine comprising in its exhaust system unidirectional means for limiting or preventing a possible reflux of gas from the exhaust system.

12. An engine according to claim 11, characterised in that said unidirectional means comprise mechanical check means.

13. An engine according to claim 11, characterised in that said unidirectional means comprise fixed exhaust pipes of sufficient length to utilize the inertia effect of the gas column put into motion in the pipe.

14. An engine according to claim 11, characterised in that it comprises more than three work chambers and means employing an ejection effect produced by the gas pulse coming from a work chamber on the emptying of another work chamber in a scavenging situation.

15. An engine according to claim 14, characterised in that it comprises exhaust pipes ensuring the communication between the exit of gas from the work chamber and the gas manifold and having a shape of a convergent or convergent/divergent nozzle whose outlet is oriented in the same direction as the gas flow in the manifold.

16. An engine according to claim 12, characterised in that the exhaust pipes open out in the same direction as the flow of the gases in the gas manifold and preferably in a concentric manner relative to the latter.

17. An engine according to claim 3, characterised in that the exhaust system comprises a very direct connection between the exhaust valve (9) and the wheel of the supercharging turbine (29) for driving in rotation the turbo-compressor unit by solely the exhaust blast pulses at a low condition of operation.

18. An engine according to claim 15, characterised in that the passage section of the gas manifold is substantially constant and sufficiently small so that, at a nominal operating condition, the rate of flow of the gases at the downstream end of the manifold exceeds the Mach number of 0.4.

19. A supercharged engine according to claim 18, characterised in that the downstream outlet of the gas manifold communicates with the inlet of the turbine of the supercharging turbo-compressor unit through a diffuser which lowers the speed to a Mach number of less than 0.4.

20. A supercharged engine according to claim 17, characterised in that the downstream outlet of the gas manifold directly communicates with the gas inlet of the supercharging turbo-compressor whose gas distribution volute is so arranged that the gas speed is not markedly reduced between the outlet of the manifold and the introduction into the rotor of the turbine.

Fig. 1

Fig. 2

Fig. 3

Fig. 4

## Fig.5

Fig:6

EP 0 245 331 B1